# EUROPÄISCHE PATENTANMELDUNG

(11) **EP 0 540 855 A1**
(43) Veröffentlichungstag der Anmeldung: **12.05.1993**
(21) Anmeldenummer: 92115442.3
(22) Anmeldetag: 09.09.1992
(51) Int. Cl.: F02F 11/00, F16J 15/08

(54) **Metallurgische Flachdichtung, insbesondere Zylinderkopfdichtung**

(30) Priorität: 05.11.1991 DE 4136403
(71) Anmelder: REINZ-DICHTUNGS-GMBH, D-89233 Neu-Ulm (DE)
(72) Erfinder: Arndt, Peter, W-7904 Erbach-Dellmensingen (DE)
(74) Vertreter: Heim, Hans-Karl, Dipl.-Ing.

(57) **Zusammenfassung**

Die Erfindung betrifft eine metallische Flachdichtung (10), die aus einem Metallagenverbund mit mehreren übereinandergeschichteten Blechlagen besteht (26,24,22) und die mindestens eine Durchgangsbohrung (16,14,12), insbesondere für Flüssigkeiten aufweist. Derartige Dichtungen werden insbesondere als Zylinderkopfdichtungen eingesetzt. Der Erfindung liegt die Aufgabe zugrunde, das elastische Verhalten der Dichtung auch bei Anwendung hoher Flächenpressungen zu verbessern und das Setzverhalten der Dichtung positiv zu beeinflussen. Hierfür sind zwischen den Blechlagen (22,24,26) und auf der Ober- und Unterseite des Metallagenverbundes zumindest im Bereich der Durchgangsbohrungen Weichstoffauflagen (28) aufgebracht.

## Beschreibung

Die Erfindung betrifft eine metallische Flachdichtung gemäß dem Oberbegriff des Anspruchs 1.

Metallische Dichtungen dieser Art, welche bereits in großen Stückzahlen als Zylinderkopfdichtungen eingesetzt werden, bestehen in der Regel aus mindestens drei übereinanderliegenden Metallblechen, wobei diese Metallbleche unterschiedlich dick und auch unterschiedliche Materialeigenschaften aufweisen können. Zur Erzielung der zur Abdichtung von Durchführungen notwendigen Flächenpressungen werden diese Metallagen mit Sicken unterschiedlichster Form versehen. Da unverformte Stahlbleche aufgrund ihrer mangelnden elastischen Eigenschaften ein nur äußerst geringes Anpassungsvermögen besitzen, sollen diese Sicken die auftretenden Bauteilverformungen durch ihr elastisches Verhalten ausgleichen. In Bereichen, in denen sehr hohe Flächenpressungen auftreten, besteht die Gefahr, daß diese Sicken weitestgehend flachgedrückt werden und somit ihr elastisches Verhalten verlieren und nicht mehr ordnungsgemäß abdichten. Deshalb sind bei diesen metallischen Dichtungen oft Zusatzelemente, wie Weichstoffeinlagen, Umbördelungen bzw. Elastomer-Dichtelemente notwendig, um eine zuverlässige Abdichtung auch bei höheren Flächenpressungen über eine lange Zeit aufrechterhalten zu können.

Ferner besteht bei der Verwendung von Sicken mit unterschiedlichen Profilen die Gefahr, daß bei einem allmählichen Flachdrücken dieser Sicken im Dauerbetrieb die Flächenpressung im Bereich der Sicken abnimmt und somit ein Nachziehen der Zylinderkopfschrauben notwendig wird.

Abdichtungstechnische Maßnahmen anderer Art, wie z.B. Zusatzelemente, Weichstoffeinlagen etc. erfordern bei einer höheren Anzahl von Metallagen einen großen technischen Aufwand und sind daher nicht wirtschaftlich zu produzieren.

Der vorliegenden Erfindung liegt daher die **Aufgabe** zugrunde, eine Flachdichtung der eingangs genannten Art zu schaffen, die setzarm ist, und die mit geringem Aufwand eine dauerhafte Abdichtung auch bei niedrigen Flächenpressungen gewährleistet.

Diese Aufgabe wird bei einer Flachdichtung der gattungsgemäßen Art erfindungsgemäß durch die kennzeichnenden Merkmale des Anspruchs 1 gelöst. Vorteilhafte Weiterbildungen sind Gegenstand der Unteransprüche.

Die Weichstoffauflagen, welche vorzugsweise im Siebdruckverfahren auf die Blechlagen aufgebracht sind, werden so ausgewählt, daß sie gegen die abzudichtenden Medien beständig sind. Auf derselben Dichtung können also unterschiedliche Werkstoffe wie Silikon, Fluor oder andere geeignete Kautschuke als Weichstoffauflage verwendet werden. Es wird in jedem Fall ein Weichstoffmaterial mit hohen Rückfederungsvermögen verwendet, welches auf die Ober- und Unterseite jeder Blechlage um eine Durchbohrung herum aufgebracht wird. Auf diese Weise hat die Dichtung ein gutes Rückfederungsverhalten, ohne daS eine Profilierung bei den Blechlagen vorgesehen wird. Daher wird eine gute und dauerhafte Abdichtung der Flüssigkeitsdurchbohrungen und auch der Brennraumbohrungen erreicht. Die Dichtung ist weiterhin sehr setzarm, da eine Profilierung der Blechlagen nicht notwendig ist.

Werden kleine Einbautoleranzen benötigt, so können zusätzliche Abstandshalter, z.B. in den Schraubenbohrungen, angeordnet werden. Dadurch kann auch ein Überpressen der Weichstoffauflagen bzw. Elastomere verhindert werden. Da über das Siebdruckverfahren eine Herstellung der Auflagen kostengünstig möglich ist, sind diese Dichtungen wirtschaftlich herstellbar. Da sie sehr setzarm sind, kann auf ein späteres Nachziehen der Zylinderkopfschrauben verzichtet werden.

Die einzelnen Blechlagen können z.B. durch Punktschweißen, Nieten oder durch Umbördeln eines Deckblechs miteinander verbunden werden. Zusätzlich können die äußeren Deckbleche mit dünnen Harz- oder Elastomerbeschichtungen versehen sein. Zylinderkopfdichtungen der oben genannten Art zeigen auch im Langzeitbetrieb eine hohe Standfestigkeit, ohne daß Leckagen im Bereich der Flüssigkeitsdurchführungen auftreten.

Die Erfindung wird nachfolgend beispielsweise anhand der schematischen Zeichnung beschrieben. In dieser zeigen:
- Fig. 1: eine Aufsicht auf einen Teil einer Zylinderkopfdichtung mit einer Brennraumbohrung und mehreren Flüssigkeitsdurchbohrungen;
- Fig. 2: einen Teilschnitt gemäß der Linie A-A aus Fig. 1 in einer ersten Ausführungsform der Erfindung;
- Fig. 3: einen Teilquerschnitt gemäß der Linie A-A aus Fig. 1 in einer zweiten Ausführungsform der Erfindung;
- Fig. 4: eine Aufsicht auf eine Zylinderkopfdichtung ähnlich Fig. 1 mit vollflächig beschichteten Blechlagen und
- Fig. 5: einen Teilquerschnitt entlang der Linie B-B aus Fig. 4.

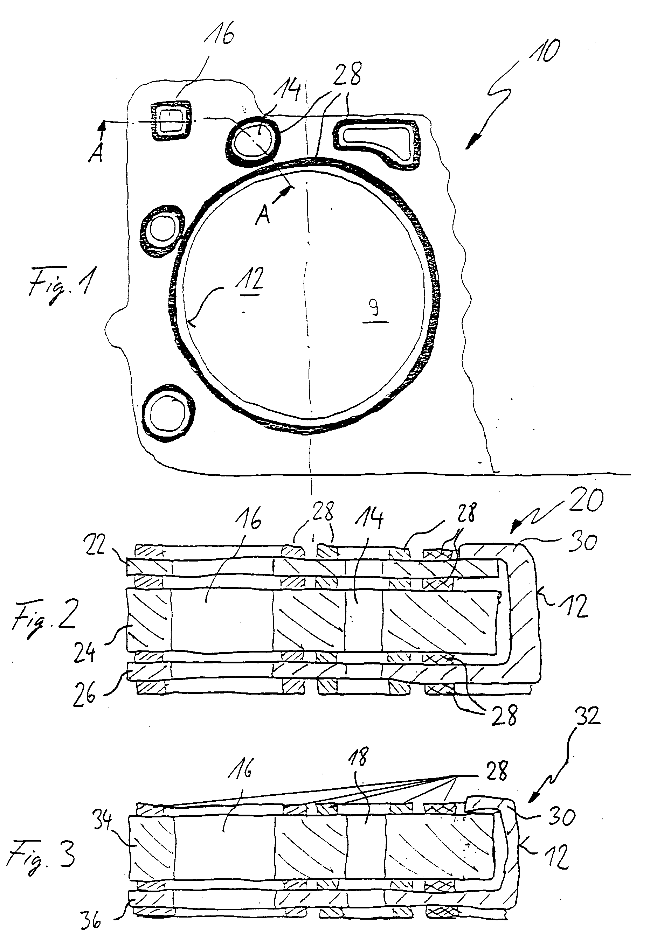

Fig. 1 zeigt einen Ausschnitt einer Zylinderkofpdichtung 10 mit einer Brennraumbohrung 9 bzw. -einfassung 12 und Flüssigkeitsbohrungen 14, 16 für den Durchtritt von Öl bzw. Kühlmittel.

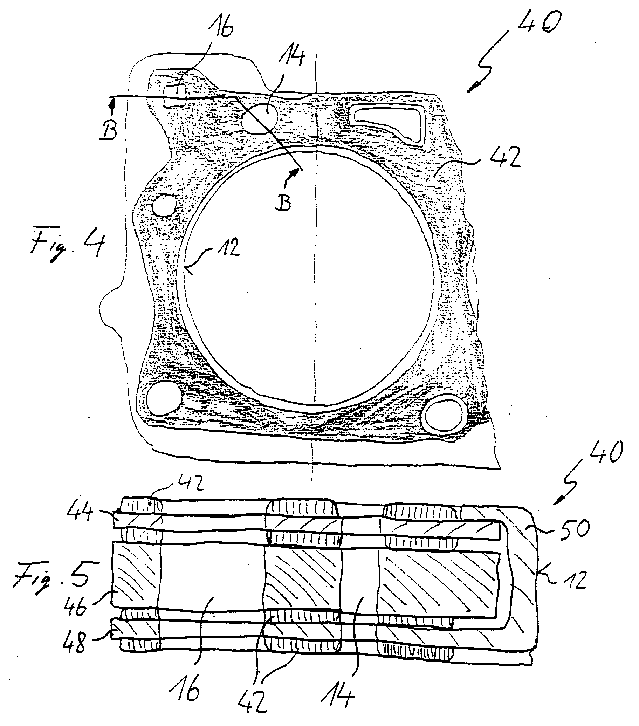

Fig. 2 zeigt einen Schnitt entlang der Linie A-A aus Fig. 1 bei einer Zylinderkopfdichtung 20, die aus drei Blechlagen 22,24,26 besteht. Die oberen und unteren Blechlagen 22,26 sind dabei als Decklagen für die innere Blechlage 24 vorgesehen. Die untere Decklage 26 ist im Bereich der Brennraumeinfassung 12 um die innere Blechlage 24 und die obere Decklage 22 herum gebördelt. Im Bereich neben der Brennraumeinfassung 12 und neben den Flüssigkeitsdurchbohrungen 14,16 sind zwischen den Blechlagen 22,24,26 und auf den Außenseiten der Decklagen 22,26 Weichstoffauflagen 28 angeordnet. Diese Weichstoffauflagen 28 sind in einem Siebdruckverfahren auf die Ober- und/oder Unterseite jeder Blechlage 22,24,26 aufgebracht. Sie haben ein hohes Rückfederungsvermögen und stellen damit sowohl bei einer niedrigen Flächenpressung zwischen Zylinderblock und Zylinderkopf als auch im Langzeitbetrieb ein ausreichendes Dichtungsvermögen sicher. Die innere Blechlage 24 besteht aus weichem Stahl oder einem Federstahl mit einer Dicke von 0,2 bis 2 mm, während die äußeren Deckbleche 22 und 26 aus einem Federstahl mit einer Dicke zwischen 0,1 und 0,5 mm bestehen.

Die Weichstoffauflagen 28 umgeben die Brennraumeinfassung 12 und die Flüssigkeitsdurchbohrungen 14 und 16 in der Art eines in sich geschlossenen Wulstes, wodurch diese Durchbohrungen gut gegen Leckagen abgedichtet sind.

Die drei Blechlagen 22 bis 26 des Mehrlagenverbundes 20 sind durch die Umbördelung 30 der unteren Decklage 26 im Bereich der Brennraumeinfassung 12 zusammengehalten. Sie können weiterhin im Randbereich der Dichtung durch nicht dargestellte Schweißpunkte oder Nieten verbunden sein.

Fig. 3 zeigt einen Zweilagenverbund 33 in einem Schnitt entlang der Linie A-A aus Fig. 1 ähnlich der Abbildung in Fig. 2. Zu Fig. 2 identische Teile sind hierbei mit identischen Bezugszeichen versehen. Der Zweilagenverbund 32 besteht aus einer oberen Blechlage 34 und aus einer unteren Decklage 36, die die Blechlage 34 im Bereich der Brennraumeinfassung 12 in der Art einer Bördelung 30 umgreift. Die Flüssigkeitsdurchbohrungen 14 und 16 und die Brennraumeinfassung 12 sind auch hier wiederum von in sich geschlossenen wulstförmigen Weichstoffauflagen 28 umgeben, die sowohl auf der Außenseite der Blechlagen 34,36 als auch zwischen diesen Lagen angeordnet sind.

Fig. 4 zeigt eine Aufsicht auf eine Zylinderkopfdichtung 40, die mit der Zylinderkopfdichtung 10 aus Fig. 1 weitgehend identisch ist. Identische Teile sind daher mit identischen Bezugszeichen versehen.

Die in Fig. 4 dargestellte Zylinderkopfdichtung 40 hat ebenfalls eine Brennraumbohrung 12 und Flüssigkeitsdurchführungen 14 und 16.

Im Gegensatz zur Zylinderkopfdichtung 10 aus Fig. 1 sind die Bohrungen bzw. Durchbohrungen 12,14 und 16 jedoch nicht von wulstförmigen Weichstoffauflagen 28, sondern im Flächenpressungsbereich zwischen Zylinderblock und Zylinderkopf vollflächig mit einer Weichstoffauflage 42 versehen.

In Fig. 5 ist diese Zylinderkopfdichtung 40 im Querschnitt entlang der Linie B-B dargestellt. Die Zylinderkopfdichtung 40 besteht aus drei Blechlagen 44,46,48, die im wesentlichen identisch zu den Blechlagen 22,24,26 in Fig. 2 ausgebildet sind. So ist die untere Decklage 48 im Bereich der Brennraumeinfassung 12 um die mittlere Blechlage 46 und die obere Decklage 44 umgebördelt. Die drei Blechlagen 44 bis 48 bilden somit einen zusammenhängenden Metallagenverbund.

Zwischen den einzelnen Blechlagen 44 bis 48 dieses Metalllagenverbunds 40 sind vollflächig Weichstoffauflagen 42 angeordnet. Diese Weichstoffauflagen 42 werden auf die Ober- und/oder Unterseite jeder Blechlage 44 bis 48 vollflächig oder partiell im Bereich hoher Flächenpressungen im Siebdruckverfahren aufgebracht. Die Weichstoffauflagen sind elastisch und haben ein gutes Rückfederungsvermögen, so daß eine dauerhafte Abdichtung auch in Bereichen niedriger Flächenpressungen erzielt wird. Undichtigkeiten im Bereich der Flüssigkeitsdurchbohrungen 14,16 und im Bereich der Brennraumeinfassung 12 werden somit weitgehend vermieden. Bei einer partiellen oder vollständigen Bedeckung der Zylinderkopfdichtung 40 mit der Weichstoffauflage 42 werden die elastischen Eigenschaften der gesamten Zylinderkopfdichtung verbessert. Die Dichtung ist somit setzarmer als herkömmliche Flachdichtungen aus mehreren Blechlagen.

Zum Erreichen einer höheren Dichtigkeit im Bereich der Flüssigkeitsdurchbohrungen 14,16 ist es jedoch bereits ausreichend, die Weichstoffauflagen um die Bohrungen bzw. Durchbohrungen herum anzuordnen. Die Weichstoffauflagen führen zu einer höheren Anpassungsfähigkeit und erlauben die Anwendung niedrigerer Flächenpressungen, da aufgrund des geringen Setzeffektes der Dichtung das für die Dichtigkeit wesentliche elastische Anpressverhalten über lange Zeit erhalten bleibt.

## Patentansprüche

1. Metallische Flachdichtung, insbesondere Zylinderkopfdichtung, für Verbrennungskraftmaschinen, die aus einem Metallagenverbund mit mehreren übereinander geschichteten Blechlagen besteht und die mindestens eine Durchgangsbohrung aufweist,
dadurch **gekennzeichnet**,
daß zwischen jeweils zwei Blechlagen (22, 24, 26) des Metallagenverbundes (20) wenigstens im Bereich mindestens einer Durchgangsbohrung (9,14,16) eine Weichstoffauflage (28) angeordnet ist.

2. Metallische Flachdichtung nach Anspruch 1,
dadurch **gekennzeichnet**,
daß auf den Außenseiten des Metallagenverbundes (20) wenigstens im Bereich mindestens einer Durchgangsbohrung (9,14,16) eine Weichstoffauflage (28) angeordnet ist.

3. Metallische Flachdichtung nach Anspruch 1 oder 2,
dadurch **gekennzeichnet**,
daß die Weichstoffauflage (28,42) als Siebdruckauflage auf der Oberseite und/oder Unterseite jeder Blechlage (22,24,26; 44,46,48) angeordnet ist.

4. Metallische Flachdichtung nach einem der vorhergehenden Ansprüche,
dadurch **gekennzeichnet**,
daß die Dicke der Weichstoffauflagen (28,42) zwischen 0,03 und 0,3 mm liegt.

5. Metallische Flachdichtung nach einem der vorhergehenden Ansprüche,
dadurch **gekennzeichnet**,
daß jede flüssigkeitsführende Durchgangsbohrung (14,16) von einer Weichstoffauflage (28) umgeben ist.

6. Metallische Flachdichtung nach einem der vorhergehenden Ansprüche,
dadurch **gekennzeichnet**,
daß jede Brennraumeinfassung (12) von einer Weichstoffauflage (28) umgeben ist.

7. Metallische Flachdichtung nach einem der vorhergehenden Ansprüche,
dadurch **gekennzeichnet**,
daß die Weichstoffauflagen (28) eine in sich geschlossene Wulstform aufweisen.

8. Metallische Flachdichtung nach einem der Ansprüche 1 bis 5,
dadurch **gekennzeichnet**,
daß die Weichstoffauflage (42) jede Blechlage (44 bis 48) des Metallagenverbundes (40) vollständig bedeckt.

9. Metallische Flachdichtung nach einem der vorhergehenden Ansprüche,
dadurch **gekennzeichnet**,
daß die Weichstoffauflage aus Gummi der Klassen Nitrilkautschuk, Acrylkautschuk, Fluorkautschuk, Silikonkautschuk, Ethylen/Propylen-Kautschuk oder Polyurethan besteht.

10. Metallische Flachdichtung nach einem der Ansprüche 1 bis 8,
dadurch **gekennzeichnet**,
daß die Weichstoffauflage aus Duroplasten, insbesondere Epoxyharzen besteht.

11. Metallische Flachdichtung nach einem der vorhergehenden Ansprüche,
dadurch **gekennzeichnet**,
daß der Metallagenverbund (20) aus äußeren Deckblechen (22,26) und mindestens einer inneren Blechlage (24) besteht, wobei die innere Blechlage (24) aus weichem Stahl mit einer Dicke von 0,2 bis 2,0 mm und die äußeren Deckbleche (22,26) aus weichem Stahl oder Federstahl mit einer Dicke von 0,1 bis 0,5 mm bestehen.

12. Metallische Flachdichtung nach einem der vorhergehenden Ansprüche,
dadurch **gekennzeichnet**,
daß die Deckbleche zusätzlich mit dünnen Harz- oder Elastomerbeschichtungen versehen sind.
